# EUROPEAN PATENT SPECIFICATION

(11) **EP 2 119 386 B1**
(45) Date of publication and mention of the grant of the patent: **22.12.2010**
(21) Application number: 08425346.7
(22) Date of filing: 15.05.2008
(51) Int. Cl.: A47J 31/46, A47J 31/36

(54) **Coffee machine**
Kaffeemaschine
Machine à café

(43) Date of publication of application: 18.11.2009
(73) Proprietor: De'Longhi S.p.A., 31100 Treviso (IT)
(72) Inventor: De'Longhi, Giuseppe, 31100 Treviso (IT)
(74) Representative: Rapisardi, Mariacristina

(56) References cited:
- EP-A- 1 302 141
- WO-A-2004/069012
- DE-U1-202005 011 204

## Description

The present invention relates to a machine for production of coffee. Coffee machines of the prior art generally comprise a boiler for heating water to be sent to a brewing unit comprising a closure piston and a brewing cylinder movable relative to the closure piston so as to engage with the closure piston to form a brewing chamber for producing coffee or disengage from the closure piston to enable loading of fresh coffee powder into, or ejection of spent coffee powder from, said brewing cylinder. In order to feed the water from the boiler to the brewing chamber via the closure piston, the closure piston has a first body hydraulically connected to the boiler and a second body slidably mounted thereupon. When the brewing cylinder approaches and engages with the closure piston, the second body is pushed towards the first body. At a certain relative position between the first and second bodies, first valve means open, allowing, water from the boiler to pass through the closure piston to the brewing chamber, thereby producing coffee. The brewed coffee exits the brewing chamber via a production outlet. After the production cycle, the brewing cylinder disengages from the closure piston and any residual pressure in the brewing chamber is discharged via separate second valve means that open when the first valve means close. Opening of said second valve means put the brewing chamber in communication with the air pressure of the atmosphere so letting the brewing cylinder to disengage the closure piston.

Such coffee machines can also be used for creating other coffee-based beverages, such as cappuccino, by virtue of their ability to create steam. For creating the steam, the boiler is set so as to increase the temperature of the water to above that desired for producing coffee. The heated water/steam is passed through a hydraulic circuit to a remote hot water/steam outlet.

In the coffee machines of the prior art, an electrovalve is used to direct the water from the boiler to either the valve means leading to the brewing chamber or to the remote hot water/steam outlet. However, such electrovalves are expensive and complex to control as they also require coordination with the movement of the brewing cylinder so as to ensure that the hydraulic path from the boiler to the remote hot water/steam outlet is closed during brewing so as to preventing dry-out and malfunctioning of the machine.

Furthermore an electrovalve tends to easily fur up with scale so as to jeopardize its reliability and efficiency.

Document WO-A-2004/069012 discloses a coffee machine according to the preamble of independent claim 1.

The technical task proposed by the present invention is therefore that of providing a coffee machine that overcomes the noted technical drawbacks of the prior art.

Within the scope of this technical task is therefore that of providing a coffee machine capable of selectively feed steam and/or hot water from a boiler to a brewing chamber or to a remote outlet by a simple, cost-effective design.

Another object of the invention is that of providing a coffee machine capable of automatically closing a hydraulic path from a boiler to a remote outlet during brewing, and automatically opening the path before and after a brewing cycle.

A further object of the invention is that of providing a coffee machine capable of preventing dry-out of its hydraulic circuits and consequent malfunction.

The technical task, as well as these and other objects, are achieved according to the present invention by a coffee machine comprising a boiler and a brewing unit having a closure piston and a brewing cylinder movable between a first position of disengagement from said closure piston for opening a brewing chamber defined therebetween and a second position of engagement with said closure piston for closure of said brewing chamber, said closure piston having a first body hydraulically connected to said boiler and slidably supporting a second body movable along a translation axis by said brewing cylinder, first valve means for feeding water from said boiler to said brewing chamber, and second valve means for release for pressure from said brewing chamber at the end of a coffee production, characterised in that it comprises third valve means operable through the relative displacement between said first and second body, said third valve means being along a hydraulic circuit connecting said boiler to a hot water/steam delivery outlet remote from said brewing unit, said hydraulic circuit having downstream of said third valve means diversion means for selectively diverting the flow to said hot water/steam delivery outlet or to a discharge outlet.

The exploitation of the relative movement of second body of the closure piston in the actuation of the third valve means provides a simple, mechanical arrangement that avoids the need for an electrovalve and its associated cost and complexity.

The same relative movement can preferably be exploited to open/close the first and second valve means.

Furthermore, the arrangement of the invention ensures that the opening of the first valve means and the opening of the third valve means are mutually exclusive, preventing accidental simultaneous operation of the coffee machine in steam and coffee-production modes, thereby preventing dry-out and subsequent malfunction of the machine. Importantly, the mutual exclusivity of the opening of the first and third valve means, coupled with the existence of diversion means for diverting the flow to a discharge outlet downstream of the third valve means, enables priming of the pump providing water to the boiler and consequent removal of any air in the circuit during the first use of the machine. This operation proceeds in an automatic manner, without the user having to place a container below the hot water/steam outlet as the spent water is directed to a discharge outlet.

A key advantage of the invention is the increased and improved operation of the procedure for the changing machine operating mode between steam production and coffee production. As is described in more detail below, the mutual exclusivity of the opening of the first and third valve means, and the mechanical automation thereof, enables rapid alteration of the temperature of the water/steam exiting the boiler.

The invention comprises coffee machine having a boiler preferably fed water from a water tank via a pump. Hydraulically connected to the boiler is a first body of a closure piston. Slidably supported on the first body along is a second body of the closure piston, movable along a translation axis by a brewing cylinder, said brewing cylinder itself being movable between a first position of disengagement form the closure piston and a second position of engagement of the closure piston. When engaged with the closure piston, the brewing cylinder defines a brewing chamber therebetween. The second body preferably comprises a cylindrical part and a cover plate having apertures. The interstitial space between the cover plate and one end of the first body allows water exiting the first body to be distributed through the apertures of the cover plate and enter into the brewing chamber.

Importantly, the machine comprises first valve means for feeding water from the boiler to the brewing chamber and being operable by the relative translational movement between the second body and the first body of the closure piston. The first valve means comprise a first stem integrally formed with the first body and parallel to the translational axis of the second body. The first valve means also comprise a housing for the first stem, integrally formed with the cylindrical portion of the second body. This integrated cooperation enables the relative movement of the second and first body to open or close the first valve means.

The first body preferably comprises a first hollow piece for distribution of the fluid coming from the boiler to a hydraulic circuit and to the brewing chamber, said hollow piece having an inlet in hydraulic connection with the boiler, and a second outlet way in hydraulic connection with a first duct having the first valve means. When open, the first valve means enable fluid flow from the first duct to the interstitial space.

Furthermore, the coffee machine comprises second valve means for releasing pressure from the brewing chamber at the end of a coffee production cycle and being operable by the relative displacement of the second body and the first body of the closure piston in order to close when said first valve means are opened and vice versa. The second valve means comprise a second stem integrally formed with the second body parallel to the translational axis and a housing for said second stem integrally formed with the first body. This integrated cooperation enables the relative movement of the second and first body to open or close the second valve means.

The first body preferably further comprises a second hollow piece for transfer of the fluid coming from said brewing chamber to said pressure release outlet, said second hollow piece having an outlet in hydraulic connection with the pressure release outlet and an inlet way in hydraulic connection with a second duct having the second valve means. When open, the second valve means enable fluid flow from the interstitial space to the second duct, or vice versa.

At least one spring is preferably disposed between the fist and second bodies for retaining the first valve means closed when the brewing cylinder is in the first position of disengagement from the closure piston.

Crucially, the coffee machine comprises third valve means operable by the relative displacement of the second body. The third valve means are located on a hydraulic circuit connecting the boiler to a hot water/steam delivery outlet remote from the brewing unit. Downstream of the thirds valve means, the hydraulic circuit has diversion means for selectively diverting the flow of the hot water/steam to delivery outlet or to a discharge outlet.

The third valve means comprise an obstructing stem parallel to the translation axis and a housing for the obstructing stem. The housing is preferably defined by a lateral outward protrusion of the first body, close to the boiler, and is integrally formed with the first hollow piece of the closure piston such that the hollow piece has a first outlet way in hydraulic connection with the housing, allowing fluid from the boiler to pass either through the hydraulic circuit to a hot water/steam deliver or discharge outlet or to the brewing chamber, depending on the valve means open. The stem of the third valve means is directly or indirectly operable by the relative movement of the second body and preferable via a lateral outward protrusion of the second body.

The arrangement of the third valve means, and their opening or closing by the relative displacement of the closure piston ensure that, when the first valve means are closed, the third valve means are open and vice versa.

The hydraulic circuit advantageously comprises a connecting pipe for remote connection between the housing of the third valve means and the diversion means. The diversion means preferably comprise a tap selectively connectable to the hot water/steam delivery outlet or to the discharge outlet. The hot water/steam delivery outlet can be further connected to heating means in the form of a supplementary boiler for increasing the temperature of the hot water/steam.

Other characteristics of the present invention are moreover defined in the subsequent claims. Further characteristics and advantages of the present invention will be more evident from the description of preferred, but not exclusive embodiments of the coffee machine with valve means according to the finding, illustrated in the attached, non-limiting drawings wherein:
Figure 1 shows a schematic view of one embodiment of the invention, in combination with cross-sectional views of parts thereof, in discharge mode.
Figure 2 shows a schematic view of the embodiment of Figure 1, in combination with cross-sectional views of parts thereof, in steam production mode.
Figure 3 shows a schematic view of the embodiment of Figure 1, in combination with cross-sectional views of parts thereof, in coffee production mode.
Figure 4 shows a cross-sectional view of the closure piston of a second embodiment of the invention.
Figure 5 shows schematic view of a third embodiment of the invention, in combination with cross-sectional view of parts thereof, in hot water/steam production mode or discharge mode.
The reference numbers refer to equivalent features in each of the figures.

With reference to the above figures, one embodiment of the invention comprises a boiler (3) fed water from a water tank (1) by a pump (2). Connected to the boiler is a first body (4) of a closure piston. Slidably mounted on the first body (4) is a second body (5) of the closure piston, having a cylindrical portion (16) and a cover plate (17) having apertures (18) for communicating creating a hydraulic connection between an interstitial space (19) and a brewing chamber formed by the engagement of brewing cylinder (7) with the closure piston. A spring (11) biases the second body (5) away from the first body (4).

A first hollow piece of the first body (4) has an inlet (8) from the boiler (3) and a first outlet way (40) to a housing for third valve means and a second outlet way (41) in hydraulic connection with a first duct (42) having first valve means. The first valve means comprise a first stem (21) integrally formed with the first body (4) and a housing (22) integrally formed the cylindrical portion (16) of the second body (5). An upper first o-ring (48) and a lower first o-ring (49) are located on the first stem (21) such that, when the first valve means are in a closed position, both first o-rings bear against the housing (22) of the first stem, thereby preventing fluid flow from said first duct (42) to the interstitial space (19). When the first valve means are in an open position, the lower first o-ring (49) meets an enlargement (10) of the housing (22), permitting fluid flow therebetween, hence allowing fluid flow from the first duct (42) to the interstitial space (19).

Within the first hollow piece of the first body (4) a second spring (46) is located, connected to a sphere-shaped cap (47) for preventing flow from the boiler (3) to the second outlet way (41) until the pressure in the boiler overcomes the force of the second spring (46). This ensures that the minimum required pressure for brewing coffee is achieved prior to any coffee production cycle, in turn helping to ensure correct functioning of the machine and the quality of the brewed coffee.

The first body (4) also comprises a second hollow piece having an outlet way (43) in hydraulic connection with a pressure release outlet (14) and an inlet (44) in hydraulic connection with a second duct (45) having second valve means. The second valve means comprise a second stem (23) integrally formed with the second body (5) and a housing (24) integrally formed with the first body. An upper second o-ring (50) and a lower second o-ring (51) are located on the second stem (23) such that, when the second valve means are in a closed position, both first o-rings bear against the housing (24) of the second stem, thereby preventing fluid flow from said second duct (45) to the pressure release outlet (14). When the second valve means are in an open position, the upper second o-ring (50) meets an enlargement of the housing (24), permitting fluid flow therebetween, hence allowing fluid flow from the second duct (45) to the pressure release outlet (14).

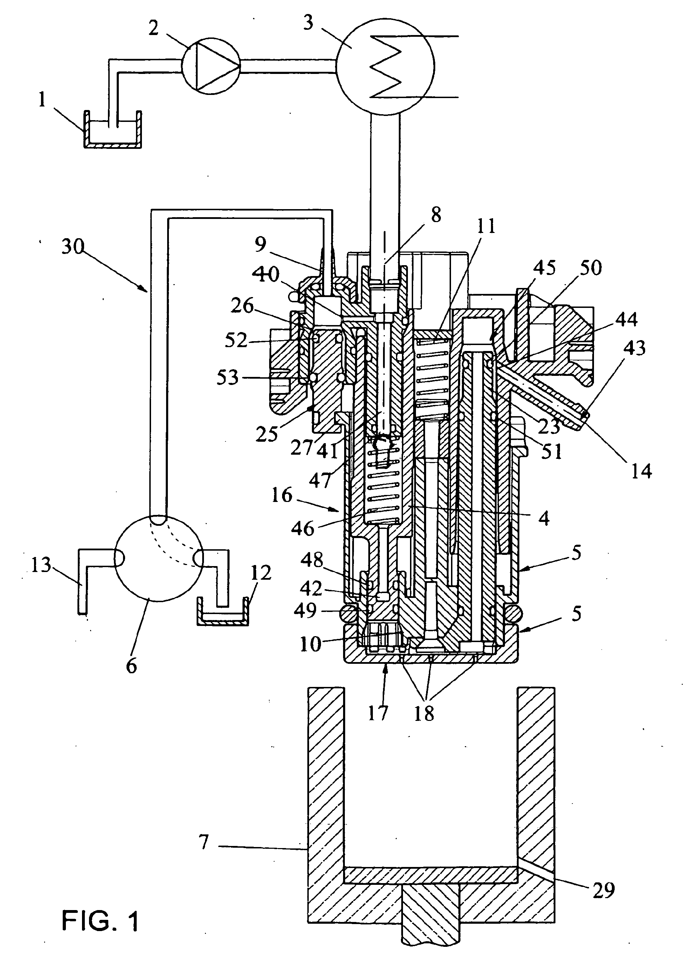

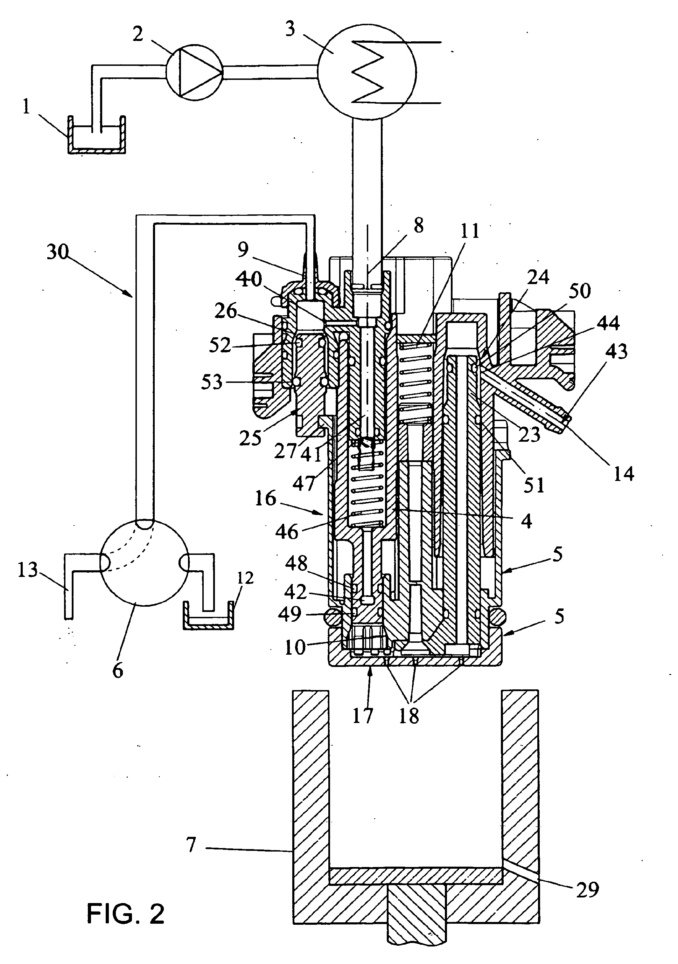

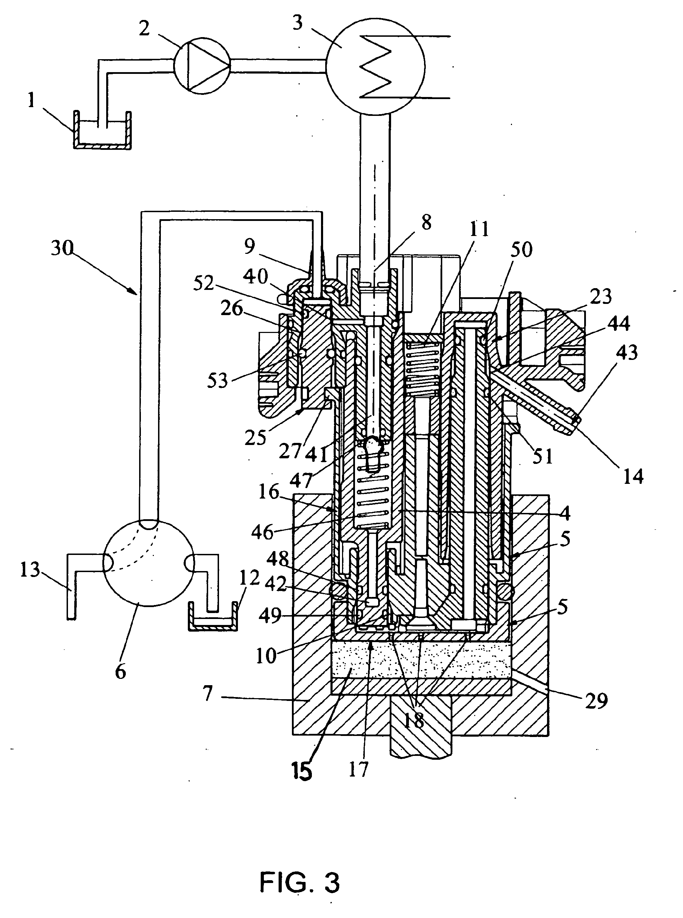

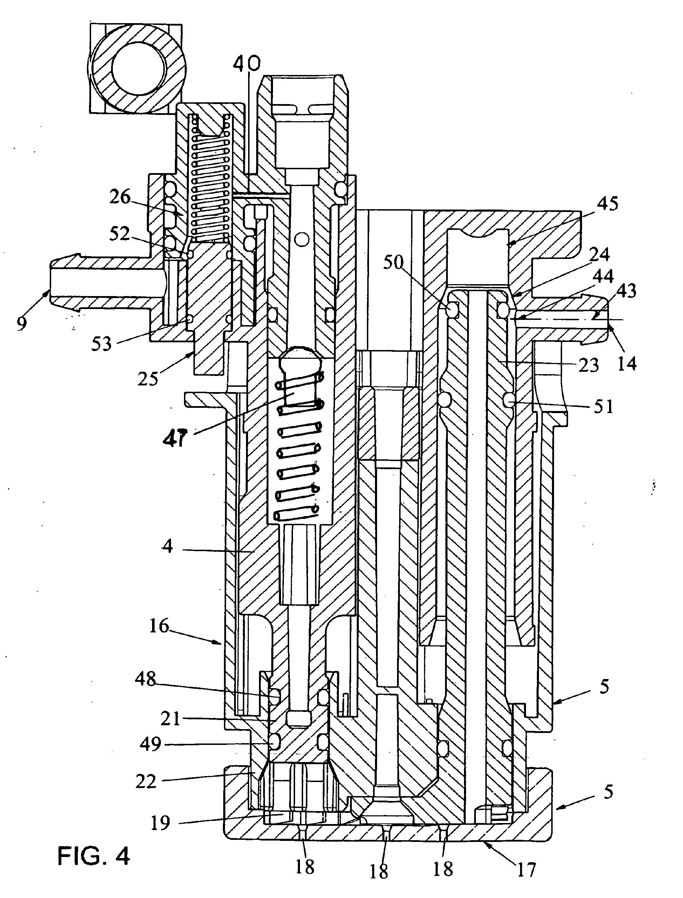

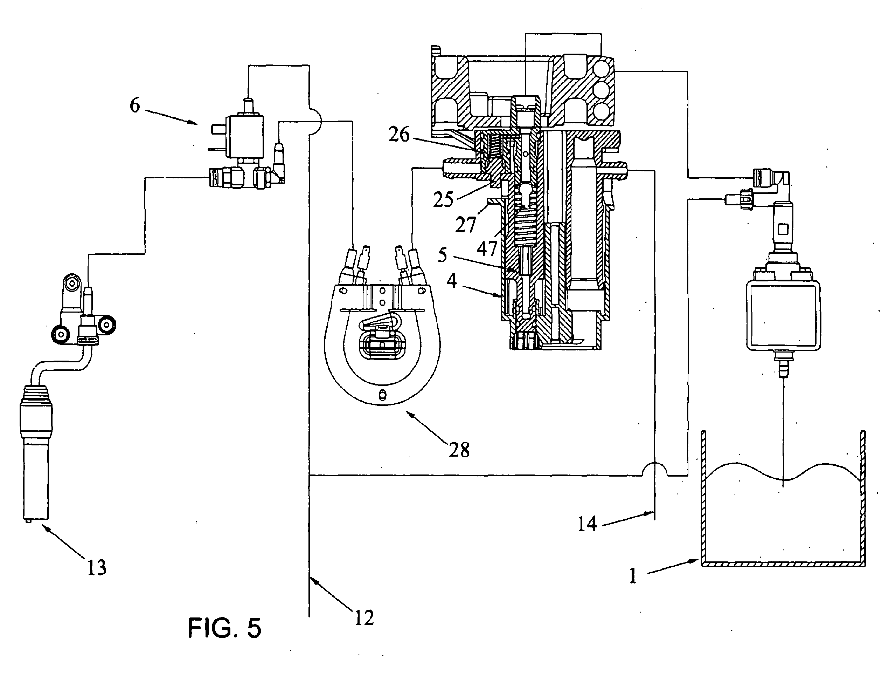

The third valve means comprise an obstructing stem (25) and a housing (26) defined by a lateral outward protrusion of the first body (4). The housing (26) of the third valve means is integrally formed with the first hollow piece of the closure piston. The obstructing stem (25) is preferably operable by the translational movement of a lateral outward protrusion (27) of the second body (5). The obstructing stem (25) can optionally be fixedly supported by said lateral outward protrusion (27) as in figures 1 - 3, or it can be movably supported by the housing (26) as in figures 4 and 5. An upper third o-ring (52) and a lower third o-ring (53) are located on the obstructing stem (25) such that, when the third valve means are in a closed position, both first o-rings bear against the housing (26) of the third stem, thereby preventing fluid flow from the first outlet way (40) to the third valve means outlet (9). When the third valve means are in an open position, the upper third o-ring (52) meets an enlargement of the housing (26), permitting fluid flow therebetween, hence allowing fluid flow from the first outlet way (40) to the third valve means outlet (9).

Downstream of the thirds valve means, the hydraulic circuit has diversion means (6) in the form of a tap for selectively diverting the flow of the hot water/steam to a delivery outlet (13) or to a discharge outlet (12). A supplemental boiler (28) may be used in the hydraulic path to further increase the temperature of the hot water/steam exiting from the third valve means.

In use, upon a user request for coffee, the machine first fills the brewing cylinder (7) with coffee powder (15). The brewing cylinder (7) then approaches the closure piston and engages with the second body (5) thereof, compressing the spring (11) and pushing it towards the first body (4) of the closure piston. The lateral outward protrusion (27) of the second body (5) displaces the obstructing stem (25) within the housing (26) of the third valve means, thereby closing the third valve means, and simultaneously the housing (22) of the first stem (21) of the first valve means is displaced, thereby opening the first valve means. The second stem (23) of the second valve means is simultaneously displaced within its housing (24), thereby closing the second valve means. Fluid passes from the boiler (3) though the closure piston to the brewing chamber and brewed coffee exits a production outlet (29).

After brewing is completed, the brewing cylinder (7) disengages from the closure piston. The compressed spring (11) biases the second body (5) away from the fist body (4), hence closing the first valve means, opening the third valve means, and opening the second valve means to allow pressure discharge from the brewing chamber and to permit expulsion of any residual fluid in the brewing cylinder.

The coffee machine of the present invention has an improved productivity due its capability of quickly change its working parameters so as to fit the required condition for selectively starting a cycle of production of a coffee or cappuccino beverage.

As a matter of fact, the temperature of the steam required for cappuccino (about 120°C) is higher than the temperature of the water (about 100°C) required for production of coffee.

The first case hereinbelow analysed is when the user wants a cappuccino while the last cycle of the machine was for production of coffee.

After a coffee production cycle, the pump (2) is stopped and the automatic opening of the third valve means connects the boiler (3) to the atmosphere via a connecting pipe (30), diversion means (6) and discharge outlet (12) and consequently discharges the residual pressure and contents of the boiler. After a user request for steam, the now empty boiler (3) is heated to a temperature exceeding that used for coffee production. The significant speed improvement in this heating operation is due to the boiler (3) having been emptied. Having attained the desired boiler temperature, the user rotates the diversion means (6) so as to connect the hydraulic path to the hot water/steam outlet (13) and activates the pump (2), thereby sending water to the boiler (3) and producing steam.

After steam production, the diversion means (6) are rotated so as to connect the hydraulic path to the discharge outlet (12), thereby again connecting the boiler (3) to the atmosphere and discharging the residual pressure in the boiler.

The second case hereinbelow analysed is when the user wants a coffee while the last cycle of the machine was for production of cappuccino.

After a user request for coffee, the temperature of the now empty boiler (3) is reduced in order to achieve appropriate coffee production conditions. This operation is accelerated by a pulse activation of the pump to flush the boiler (3) with a jet of fresh water which exits the machine via the discharge outlet (12) on the hydraulic path. Having attained the desired boiler temperature, the machine activates the pump (2) for the coffee production cycle described above.

The coffee machine thus conceived is susceptible to numerous modifications and variations, all falling within the scope of the invention defined in the claims. In practice, any material type or size may be used, according to the needs and the state of the art.

## Claims

1. A coffee machine comprising a boiler and a brewing unit having a closure piston and a brewing cylinder movable between a first position of disengagement from said closure piston for opening a brewing chamber defined therebetween and a second position of engagement with said closure piston for closure of said brewing chamber, said closure piston having a first body hydraulically connected to said boiler and slidably supporting a second body movable along a translation axis by said brewing cylinder, first valve means for feeding water from said boiler to said brewing chamber, and second valve means for release for pressure from said brewing chamber at the end of a coffee production cycle, **characterised in that** it comprises third valve means operable through the relative translational movement between said second body and said first body, said third valve means being along a hydraulic circuit connecting said boiler to a hot water/steam delivery outlet remote from said brewing unit, said hydraulic circuit having downstream of said third valve means diversion means for selectively diverting the flow to said hot water/steam delivery outlet or to a discharge outlet.

2. A coffee machine according to claim 1, **characterised in that** said first valve means are operable through said relative translational movement, and second valve means are operable through said relative translational movement in order to close when said first valve means are opened and vice versa, said third valve means being operable through said relative displacement so that when said first valve means are closed said third valve means are opened and vice versa.

3. A coffee machine as claimed in any preceding claims, **characterised in that** said third valve means comprise an obstructing stem parallel to said translation axis and a housing for said obstructing stem, said stem being operable directly or indirectly by said second body for opening and closure of said third valve means.

4. A coffee machine as claimed in any preceding claims, **characterised in that** said obstructing stem of said third valve means is operable by a lateral outward protrusion of said second body for opening and closure of said third valve means.

5. A coffee machine as claimed in any preceding claim, **characterised in that** said housing is defined by a lateral outward protrusion of said first body.

6. A coffee machine as claimed in any preceding claim, **characterised in that** said obstructing stem is fixedly supported by said lateral outward protrusion of said second body.

7. A coffee machine as claimed in any preceding claim, **characterised in that** said obstructing stem is movably supported parallel to said translational axis by said housing.

8. A coffee machine as claimed in any preceding claim, **characterised in that** said hydraulic circuit comprises a connecting pipe for remote connection between said housing and said diversion means.

9. A coffee machine as claimed in any preceding claim, **characterised in that** said housing is integrally formed with a first hollow piece for distribution of the fluid coming from said boiler to said hydraulic circuit and to said brewing chamber, said hollow piece having an inlet in hydraulic connection with said boiler, a first outlet way in hydraulic connection with said housing and a second outlet way in hydraulic connection with a first duct having said first valve means.

10. A coffee machine as claimed in any preceding claim, **characterised in that** said first body comprises a second hollow piece for transfer of the fluid coming from said brewing chamber to said pressure release outlet, said second hollow piece having an outlet in hydraulic connection with said pressure release outlet and an inlet way in hydraulic connection with a second duct having said second valve means.

11. A coffee machine as claimed in any preceding claim, **characterised in that** said second body comprises a cylindrical portion having said protrusion and being slidably mounted on said first body, and having a cover plate having apertures for hydraulically connecting an interstitial space defined between said first body and said cover plate of said second body to said brewing chamber.

12. A coffee machine as claimed in any preceding claim, **characterised in that** said first valve means comprise a first stem integrally formed with said first body parallel to said translational axis and a housing for said first stem integrally formed with said cylindrical portion of said second body such that, when open, said first valve means can feed water from said first duct to said interstitial space.

13. A coffee machine as claimed in any preceding claim, **characterised in that** said second valve means comprise a second stem integrally formed with said second body parallel to said translational axis and a housing for said second stem integrally formed with said first body such that, when open, said second valve means can feed fluid from said interstitial space to said second duct.

14. A coffee machine as claimed in any preceding claim, **characterised in that** it further comprises at least one spring disposed between said fist body and said second body for retaining said first valve means closed when said brewing cylinder is in said first position of disengagement from said closure piston.

15. A coffee machine as claimed in any preceding claim, **characterised in that** said diversion means comprise a tap selectively connectable to said delivery outlet or to said discharge outlet.

16. A coffee machine as claimed in any preceding claim, **characterised in that** said hot water/steam delivery outlet is further connected to heating means for increased heating said hot water/steam.

17. A coffee machine as claimed in any preceding claim, **characterised in that** it comprises a water tank connected to a pump for feeding water to said boiler.

## Patentansprüche

1. Kaffeemaschine, umfassend einen Kessel und eine Brüheinheit, die einen Verschlusskolben und einen Brühzylinder aufweist, der zwischen einer ersten Außereingriffstellung vom Verschlusskolben zum Öffnen einer dazwischen abgegrenzten Brühkammer und einer zweiten Eingriffstellung mit dem Verschlusskolben zum Schließen der Brühkammer beweglich ist, wobei der Verschlusskolben einen ersten Körper aufweist, der mit dem Kessel hydraulisch verbunden ist und einen zweiten Körper, der durch den Brühzylinder an einer Translationsachse beweglich ist, erste Ventilmittel zum Zuleiten von Wasser vom Kessel zur Brühkammer sowie zweite Ventilmittel zum Ablassen von Druck der Brühkammer am Ende eines Kaffeeherstellungszyklus gleitend trägt, **dadurch gekennzeichnet, dass** sie dritte Ventilmittel umfasst, die durch die relative Translationsbewegung zwischen dem zweiten Körper und dem ersten Körper bedienbar sind, wobei die dritten Ventilmittel entlang eines Hydraulikkreises angeordnet sind, der den Kessel mit einem von der Brüheinheit entfernt liegenden Heißwasser-/Dampf-Ausgabeauslass verbindet, wobei der Hydraulikkreis stromabwärts der dritten Ventilmittel Umleitungsmittel zum wahlweisen Umleiten des Durchflusses an den Heißwasser-/Dampf-Ausgabeauslass oder an einen Ausströmauslass aufweist.

2. Kaffeemaschine nach Anspruch 1, **dadurch gekennzeichnet, dass** die ersten Ventilmittel durch die relative Translationsbewegung bedienbar sind, und die zweiten Ventilmittel durch die relative Translationsbewegung bedienbar sind, um zu schließen, wenn die ersten Ventilmittel geöffnet sind und umgekehrt, wobei die dritten Ventilmittel durch die relative Verschiebung bedienbar sind, so dass, wenn die ersten Ventilmittel geschlossen sind, die dritten Ventilmittel geöffnet sind und umgekehrt.

3. Kaffeemaschine nach einem der vorangehenden Ansprüche, **dadurch gekennzeichnet, dass** die dritten Ventilmittel einen blockierenden Steg, der parallel zur Translationsachse ist, sowie ein Gehäuse für den blockierenden Steg umfassen, wobei der Steg direkt oder indirekt am zweiten Körper zum Öffnen und Schließen der dritten Ventilmittel bedienbar ist.

4. Kaffeemaschine nach einem der vorangehenden Ansprüche, **dadurch gekennzeichnet, dass** der blockierende Steg der dritten Ventilmittel an einem seitlichen, äußeren Vorsprung des zweiten Körpers zum Öffnen und Schließen der dritten Ventilmittel bedienbar ist.

5. Kaffeemaschine nach einem der vorangehenden Ansprüche, **dadurch gekennzeichnet, dass** das Gehäuse durch einen seitlichen, äußeren Vorsprung des ersten Körpers abgegrenzt ist.

6. Kaffeemaschine nach einem der vorangehenden Ansprüche, **dadurch gekennzeichnet, dass** der blockierende Steg vom seitlichen, äußeren Vorsprung des zweiten Körpers fest getragen wird.

7. Kaffeemaschine nach einem der vorangehenden Ansprüche, **dadurch gekennzeichnet, dass** der blockierende Steg parallel zur Translationsachse am Gehäuse beweglich getragen wird.

8. Kaffeemaschine nach einem der vorangehenden Ansprüche, **dadurch gekennzeichnet, dass** der Hydraulikkreis eine Verbindungsröhre für die entfernt liegende Verbindung zwischen dem Gehäuse und den Umleitungsmitteln umfasst.

9. Kaffeemaschine nach einem der vorangehenden Ansprüche, **dadurch gekennzeichnet, dass** das Gehäuse einstückig mit einem ersten Hohlstück zur Verteilung der Flüssigkeit ausgebildet ist, die vom Kessel zum Hydraulikkreis und zur Brühkammer kommt, wobei das Hohlstück einen Einlass in hydraulischer Verbindung mit dem Kessel, einen ersten Auslass in hydraulischer Verbindung mit dem Gehäuse und einen zweiten Auslassweg in hydraulischer Verbindung mit einer ersten Leitung aufweist, die die ersten Ventilmittel aufweist.

10. Kaffeemaschine nach einem der vorangehenden Ansprüche, **dadurch gekennzeichnet, dass** der erste Körper ein zweites Hohlstück zur Weiterleitung der Flüssigkeit, die von der Brühkammer zum Druckablassauslass kommt, umfasst, wobei das zweite Hohlstück einen Auslass in hydraulischer Verbindung mit dem Druckablassauslass sowie einen Einlassweg in hydraulischer Verbindung mit einer zweiten Leitung aufweist, die die zweiten Ventilmittel aufweist.

11. Kaffeemaschine nach einem der vorangehenden Ansprüche, **dadurch gekennzeichnet, dass** der zweite Körper einen zylindrischen Abschnitt umfasst, der den Vorsprung aufweist und gleitend auf dem ersten Körper befestigt ist, und der eine Abdeckplatte aufweist, die Öffnungen für das hydraulische Verbinden eines Zwischenraums, der zwischen dem ersten Körper und der Abdeckplatte des zweiten Körpers abgegrenzt ist, mit der Brühkammer aufweist.

12. Kaffeemaschine nach einem der vorangehenden Ansprüche, **dadurch gekennzeichnet, dass** die ersten Ventilmittel einen ersten Steg, der einstückig mit dem ersten Körper parallel zur Translationsachse ausgebildet ist, sowie ein Gehäuse für den ersten Steg umfasst, das einstückig mit dem zylindrischen Abschnitt des zweiten Körpers derart ausgebildet ist, dass die ersten Ventilmittel bei Öffnung Wasser von der ersten Leitung zum Zwischenraum zuleiten können.

13. Kaffeemaschine nach einem der vorangehenden Ansprüche, **dadurch gekennzeichnet, dass** die zweiten Ventilmittel einen zweiten Steg, der einstückig mit dem zweiten Körper parallel zur Translationsachse ausgebildet ist, sowie ein Gehäuse für den zweiten Steg umfasst, das einstückig mit dem ersten Körper derart ausgebildet ist, dass die zweiten Ventilmittel bei Öffnung Flüssigkeit vom Zwischenraum zur zweiten Leitung zuleiten können.

14. Kaffeemaschine nach einem der vorangehenden Ansprüche, **dadurch gekennzeichnet, dass** sie ferner mindestens eine Feder umfasst, die zwischen dem ersten Körper und dem zweiten Körper angeordnet ist, um das erste Ventilmittel geschlossen zu halten, wenn der Brühzylinder in der ersten Ausrückstellung vom Verschlusskolben ist.

15. Kaffeemaschine nach einem der vorangehenden Ansprüche, **dadurch gekennzeichnet, dass** die Umleitungsmittel einen Hahn umfassen, der wahlweise mit dem Ausgabeauslass oder dem Ausströmauslass verbindbar ist.

16. Kaffeemaschine nach einem der vorangehenden Ansprüche, **dadurch gekennzeichnet, dass** der Heißwasser-/Dampf-Ausgabeauslass ferner mit Heizmitteln für ein erhöhtes Erhitzen des Heißwassers/Dampfes verbunden ist.

17. Kaffeemaschine nach einem der vorangehenden Ansprüche, **dadurch gekennzeichnet, dass** sie ferner einen Wasserbehälter umfasst, der mit einer Pumpe zum Zuleiten von Wasser zum Kessel verbunden ist.

## Revendications

1. Machine à café comprenant une chaudière et un dispositif infuseur avec un piston de fermeture et un cylindre infuseur pouvant se déplacer entre une première position de désengagement dudit piston de fermeture pour ouvrir une chambre d'infusion définie entre ces deux éléments, et une deuxième position d'engagement dans ledit piston de fermeture pour fermer ladite chambre d'infusion, ledit piston de fermeture ayant un premier corps raccordé hydrauliquement à ladite chaudière et soutenant sur des coulisses un deuxième corps pouvant se déplacer le long d'un axe de translation via ledit cylindre infuseur, une première vanne acheminant l'eau de ladite chaudière à ladite chambre d'infusion, et une deuxième vanne dégageant la pression de ladite chambre d'infusion à la fin du cycle de production du café, **caractérisée en ce qu'**elle comprend une troisième vanne pouvant être activée par le mouvement de translation relatif entre ledit deuxième corps et ledit premier corps, ladite troisième vanne étant le long d'un circuit hydraulique raccordant ladite chaudière à un orifice de sortie eau chaude/vapeur situé à distance dudit dispositif infuseur, ledit circuit hydraulique ayant, en aval de ladite troisième vanne, un dispositif de déviation pour dévier sélectivement le flux vers ledit orifice de sortie eau chaude/vapeur ou vers un orifice de décharge.

2. Machine à café selon la revendication 1, **caractérisée en ce que** ladite première vanne peut être actionnée par ledit mouvement de translation relatif, et la deuxième vanne peut être actionnée par ledit mouvement de translation relatif pour se fermer quand ladite première vanne s'ouvre, et vice versa, ladite troisième vanne pouvant être actionnée par ledit déplacement relatif de sorte que, quand ladite première vanne se ferme, ladite troisième vanne s'ouvre et vice versa.

3. Machine à café selon l'une quelconque des revendications précédentes, **caractérisée en ce que** ladite troisième vanne comprend une tige d'obstruction parallèle audit axe de translation et un logement pour ladite tige d'obstruction, ladite tige pouvant être actionnée, directement ou indirectement, par ledit deuxième corps pour ouvrir et pour fermer ladite troisième vanne.

4. Machine à café selon l'une quelconque des revendications précédentes, **caractérisée en ce que** ladite tige d'obstruction de ladite troisième vanne peut être actionnée par une protubérance externe latérale dudit deuxième corps pour ouvrir et pour fermer ladite troisième vanne.

5. Machine à café selon l'une quelconque des revendications précédentes, **caractérisée en ce que** ledit logement est défini par une protubérance externe latérale dudit premier corps.

6. Machine à café selon l'une quelconque des revendications précédentes, **caractérisée en ce que** ladite tige d'obstruction est soutenue fixement par ladite protubérance externe latérale dudit deuxième corps.

7. Machine à café selon l'une quelconque des revendications précédentes, **caractérisée en ce que** ladite tige d'obstruction est soutenue mobile, parallèle audit axe de translation, par ledit logement.

8. Machine à café selon l'une quelconque des revendications précédentes, **caractérisée en ce que** ledit circuit hydraulique comprend un tuyau de raccordement pour la connexion à distance entre ledit logement et ledit dispositif de déviation.

9. Machine à café selon l'une quelconque des revendications précédentes, **caractérisée en ce que** ledit logement est formé intégralement avec une première pièce creuse pour la distribution du fluide venant de ladite chaudière audit circuit hydraulique et à ladite chambre d'infusion, ladite pièce creuse ayant un orifice d'entrée raccordé hydrauliquement avec ladite chaudière, un premier orifice de sortie raccordé hydrauliquement avec ledit logement et un deuxième orifice de sortie raccordé hydrauliquement avec un premier tuyau ayant ladite première vanne.

10. Machine à café selon l'une quelconque des revendications précédentes, **caractérisée en ce que** ledit premier corps comprend une deuxième pièce creuse pour le transfert du fluide venant de ladite chambre d'infusion vers ledit orifice de dégagement de la pression, ladite deuxième pièce creuse ayant un orifice de sortie raccordé hydrauliquement avec ledit orifice de dégagement de la pression et un orifice d'entrée raccordé hydrauliquement avec un deuxième tuyau ayant ladite deuxième vanne.

11. Machine à café selon l'une quelconque des revendications précédentes, **caractérisée en ce que** ledit deuxième corps comprend une partie cylindrique ayant ladite protubérance et montée coulissante sur ledit premier corps, et ayant une plaque de couverture avec des ouvertures pour raccorder hydrauliquement un espace interstitiel défini entre ledit premier corps et ladite plaque de couverture dudit deuxième corps à ladite chambre d'infusion.

12. Machine à café selon l'une quelconque des revendications précédentes, **caractérisée en ce que** ladite première vanne comprend une première tige formée intégralement avec ledit premier corps parallèle audit axe de translation et un logement pour ladite première tige formée intégralement avec ladite partie cylindrique dudit deuxième corps de sorte que, une fois ouverte, ladite première vanne peut acheminer l'eau venant dudit premier tuyau vers ledit espace interstitiel.

13. Machine à café selon l'une quelconque des revendications précédentes, **caractérisée en ce que** ladite deuxième vanne comprend une deuxième tige formée intégralement avec ledit deuxième corps parallèle audit axe de translation et un logement pour ladite deuxième tige formée intégralement avec ledit premier corps de sorte que, une fois ouverte, ladite deuxième vanne peut acheminer le fluide venant dudit espace interstitiel vers ledit deuxième tuyau.

14. Machine à café selon l'une quelconque des revendications précédentes, **caractérisée en ce qu'**elle comprend également au moins un ressort placé entre ledit premier corps et ledit deuxième corps pour garder fermée ladite première vanne quand ledit cylindre infuseur se trouve dans ladite première position de désengagement dudit piston de fermeture.

15. Machine à café selon l'une quelconque des revendications précédentes, **caractérisée en ce que** ledit dispositif de déviation comprend un robinet pouvant être raccordé sélectivement audit orifice de sortie ou audit orifice de dégagement.

16. Machine à café selon l'une quelconque des revendications précédentes, **caractérisée en ce que** ledit orifice de sortie eau chaude/vapeur est aussi raccordé à un système de chauffe pour augmenter la chaleur de ladite eau chaude/vapeur.

17. Machine à café selon l'une quelconque des revendications précédentes, **caractérisée en ce qu'**elle comprend un réservoir à eau raccordé à une pompe pour acheminer l'eau vers ladite chaudière.
